# EUROPEAN PATENT SPECIFICATION

(11) **EP 2 692 745 B1**
(45) Date of publication and mention of the grant of the patent: **17.08.2016**
(21) Application number: 12764139.7
(22) Date of filing: 26.03.2012
(51) Int. Cl.: C08F 8/00, C08F 8/42, C08G 85/00, C08K 3/04, C08L 101/00

(54) **RESIN COMPOSITE MATERIAL AND PROCESS FOR PRODUCING SAME**
HARZVERBUNDMATERIAL UND HERSTELLUNGSVERFAHREN DAFÜR
MATÉRIAU EN RÉSINE COMPOSITE ET SON PROCÉDÉ DE PRODUCTION

(30) Priority: 30.03.2011 JP 2011074048; 03.08.2011 JP 2011170363; 06.03.2012 JP 2012048853
(43) Date of publication of application: 05.02.2014
(73) Proprietor: Sekisui Chemical Co., Ltd., Osaka 530-8565 (JP)
(72) Inventor: MUKOHATA, Daisuke, Mishima-gun Osaka 618-0021 (JP); INUI, Nobuhiko, Mishima-gun Osaka 618-0021 (JP); TAKAHASHI, Katsunori, Mishima-gun Osaka 618-0021 (JP); OSANO, Keiichi, Mishima-gun Osaka 618-0021 (JP)
(74) Representative: Ter Meer Steinmeister & Partner
(86) International application number: PCT/JP2012/057746
(87) International publication number: WO 2012/133303

(56) References cited:
- WO-A1-2012/029946
- WO-A2-2005/012171
- WO-A2-2009/058443
- JP-A- 2004 339 407
- JP-A- 2005 133 062
- JP-A- 2006 028 411
- JP-A- 2006 241 248
- JP-A- 2007 191 645
- JP-A- 2007 502 246
- US-A1- 2006 217 482
- US-A1- 2010 143 701
- US-A1- 2010 234 503
- YUE LIN ET AL.: 'Preparation and characterisation of covalent polymer functionalized graphene oxide' J. MATER. CHEM. vol. 21, no. 10, 14 March 2011, pages 3455 - 3461, XP055125910
- SIU-MING YUEN ET AL.: 'Silane-modified MWCNT/ PMMA composites - Preparation, electrical resistivity, thermal conductivity and thermal stability' COMPOSITES: PART A vol. 38, no. 12, 2007, pages 2527 - 2535, XP022369129
- MIN XU ET AL.: 'Synethesis and properties of Novel Polyurethane-Urea/Multiwalled Carbon Nanotube Composites' MACROMOLECULES vol. 39, no. 10, 2006, pages 3540 - 3545, XP008141939
- HAN-LANG WU ET AL.: 'Morphology, Electrical Resistance, Electromagnetic Interference Shielding and Mechanical Properties of Functionalized MWNT and Poly(ureaurethane) Nanocomposites' J. POLYM. SCI. vol. 44, no. 7, 2006, pages 1096 - 1105, XP055125913
- TSUNG-WU LIN ET AL.: 'Polyethylene glycol grafting and attachment of encapsulated magnetic iron oxide silica nanoparticles onto chlorosilanized single-wall carbon nanotubes' CARBON vol. 47, no. 6, 2009, pages 1415 - 1420, XP026077023

## Description

### TECHNICAL FIELD

The present invention to a resin composite material reinforced with a carbon material and a method for producing such a resin composite material. More particularly, the present invention relates to a resin composite material reinforced with a carbon material having a graphene structure and a method for producing such a resin composite material.

### BACKGROUND ART

In recent years, carbon materials having a graphene sheet structure have attracted attention due to their high elastic modulus or high conductivity. By compounding such a carbon material having a graphene structure with a synthetic resin, it is possible to reinforce a product made of the synthetic resin or impart conductivity to the product. Particularly, graphene sheets, carbon nanotubes, exfoliated graphite, and the like are nanosized and have a large specific surface area. Therefore, it is considered that the carbon material has a high reinforcing effect when compounded with a synthetic resin.

In general, the carbon material is preferably uniformly dispersed in a matrix resin of a composite material to allow the composite material to sufficiently exhibit its effect. Therefore, Patent Document 1 discloses a method for achieving a uniformly dispersed state using a good solvent for a thermoplastic resin and a carbon material. According to this method, a resin composite material in a uniformly dispersed state can be obtained as long as there is a common solvent for a thermoplastic resin and a carbon material.

### Prior Art Document

### Patent Document

WO 2005/012171 is directed to methods of functionalizing carbon nanotubes with organosilane species.

WO 2009/058443 describes a method of making a water soluble carbon nanostructure including treating a fluorinated carbon nanostructure material with a polyol in the presence of a base.

US 2006/0217482 is directed to a composite comprising at least one graphite-carbon nanofiber and a polymer phase covalently linked to a surface thereof, wherein the at least one graphite-carbon nanofiber surface is covalently linked to the polymer phase by at least one linker molecule having at least two reactive, functional substituents.

US 2010/0234503 is directed to a polymer composite including a polymer matrix and an alkyl-substituted carbon nanotube.

US 2010/0143701 is directed to methods of integrating carbon nanotubes into epoxy polymer composites via chemical functionalization of carbon nanotubes, and to the carbon nanotube-epoxy polymer composites produced by such methods.

Patent Document 1: JP-A-2005-264059

### SUMMARY OF THE INVENTION

### Problems to be Solved by the Invention

Such a carbon material as described above has a problem that it is very poor in dispersibility in solvent due to its strong cohesion force resulting from a π stacking force. Further, the production method disclosed in Patent Document 1 requires a large amount of solvent to disperse a carbon material in a resin. Therefore, this method has problems such as high cost of solvent and difficulty in solvent removal.

Further, the method disclosed in Patent Document 1 cannot provide a resin composite material having sufficiently high mechanical strength.

It is therefore an object of the present invention to provide a resin composite material that has excellent mechanical strength and can be easily produced and a method for producing such a resin composite material.

### Means for Solving the Problems

The present invention provides a resin composite material obtained by chemically bonding a reactive polyfunctional compound to both a thermoplastic resin and a carbon material having a graphene structure, wherein the reactive polyfunctional compound is one reactive polyfunctional compound selected from a dioxime compound, a bismaleimide compound, and a quinone compound.

In another specific aspect of the resin composite material according to the present invention, the carbon material having a graphene structure is at least one carbon material selected from the group consisting of graphene, graphene oxide, carbon nanotubes, exfoliated graphite, and exfoliated graphite oxide. In this case, the carbon material having a graphene structure is nanosized and has a large specific surface area. Therefore, a small amount of such a carbon material can further enhance the mechanical strength of the resin composite material.

The carbon material having a graphene structure is more preferably exfoliated graphite oxide whose C/O ratio determined by elemental analysis is in a range of 2 to 20. In this case, the carbon material having a graphene structure has higher dispersibility and is therefore more uniformly dispersed in the thermoplastic resin, which makes it possible to further enhance the mechanical strength of the resin composite material.

In another specific aspect of the resin composite material according to the present invention, the thermoplastic resin is a polyolefin. In this case, the use of a general-purpose polyolefin makes it possible to reduce the cost of the resin composite material.

The present invention also provides a resin composite material production method for obtaining the above-described resin composite material according to the present invention. The production method according to the present invention includes: a first step of chemically bonding the reactive polyfunctional compound and the thermoplastic resin together; and a second step of chemically bonding the reactive polyfunctional compound and the carbon material having a graphene structure together.

In a specific aspect of the resin composite material production method according to the present invention, at least one of the first and second steps is performed during a process of kneading using an extruder. In this case, the first or second step can be performed during a process of kneading raw materials in an extruder.

In another specific aspect of the resin composite material production method according to the present invention, the first and second steps are performed during a process of supplying and kneading the thermoplastic resin, the reactive polyfunctional compound, and the carbon material having a graphene structure to and in an extruder. In this case, the reactive polyfunctional compound is chemically bonded to both the thermoplastic resin and the carbon material having a graphene structure during a process of kneading in an extruder. This makes it possible to simplify a production process.

In another specific aspect of the resin composite material production method according to the present invention, the second step is performed during the process of kneading in an extruder and the first step is performed after extrusion from the extruder. In this case, it is possible to optimize the step of chemically bonding the other of the thermoplastic resin and the carbon material having a graphene structure to the reactive polyfunctional compound.

### Effects of the Invention

The resin composite material according to the present invention is obtained by chemically bonding a reactive polyfunctional compound to both a thermoplastic resin and a carbon material having a graphene structure, which makes it possible to effectively enhance the mechanical strength of the resin composite material.

The resin composite material production method according to the present invention can provide a resin composite material according to the present invention having high mechanical strength.

### EMBODIMENTS OF THE INVENTION

Hereinbelow, the present invention will be described in detail.

### (Resin Composite Material)

A resin composite material according to the present invention is obtained by chemically bonding a reactive polyfunctional compound to both a thermoplastic resin and a carbon material having a graphene structure. A conventional resin composite material obtained by simply kneading a thermoplastic resin and a carbon material does not exhibit sufficient mechanical strength, but according to the present invention, mechanical strength can be effectively enhanced because a reactive polyfunctional compound is chemically bonded to both a thermoplastic resin and a carbon material having a graphene structure.

### (Reactive Polyfunctional Compound)

The reactive polyfunctional compound to be used in the present invention is at least one reactive polyfunctional compoundselected from a dioxime compound, a bismaleimide compound, and a quinone compound.

For the reactive polyfunctional compound selected from the group consisting of a dioxime compound, a bismaleimide compound, and a quinone compound, their functional groups are radical-reactive functional groups and therefore react with radicals formed by dissociation of resin molecules in an extruder to form chemical bonding. Examples of the dioxime compound include p-quinonedioxime and p,p-dibenzoylquinonedioxime. Examples of the bismaleimide compound include N,N-p-phenylenebismaleimide, N,N-m-phenylenebismaleimide, and diphenylmethanebismaleimide. Examples of the quinone compound include hydroquinone, p-benzoquinone, and tetrachloro-p-benzoquinone.

### (Thermoplastic Resin)

A thermoplastic resin to be used in the resin composite material according to the present invention is not particularly limited. Examples of such a thermoplastic resin include polyethylene, polypropylene, ethylene-vinyl acetate copolymer, acrylonitrile-styrene copolymer, acrylonitrile-butadiene-styrene copolymer, polyvinyl chloride, acrylic resin, methacrylic resin, polystyrene, polytetrafluoroethylene, polychlorotrifluoroethylene, polyvinylidene fluoride, ethylene-vinyl alcohol copolymer, vinylidene chloride resin, chlorinated polyethylene, polydicyclopentadiene, methylpentene resin, polybutylene, polyphenylene ether, polyamide, polyphenylene ether, polyphenylene sulfide, polyether ether ketone, polyaryl ether ketone, polyamide imide, polyimide, polyether imide, polysulfone, polyether sulfone, norbornene-based resin, polyvinyl alcohol, urethane resin, polyvinyl pyrrolidone, polyethoxyethyl methacrylate, polyformaldehyde, cellulose diacetate, polyvinyl butyral, polycarbonate, and polyester. These thermoplastic resins may be used singly or in combination of two or more of them. As the thermoplastic resin, a polyolefin is preferably used which is inexpensive and is easily heat-molded.

Alternatively, the thermoplastic resin to be used may be a modified thermoplastic resin modified with a functional group. By using such a modified thermoplastic resin, it is possible to easily chemically bond the thermoplastic resin to the reactive polyfunctional compound by a reaction between the reactive polyfunctional compound and a modified portion of the modified thermoplastic resin. As such a modified thermoplastic resin, various modified thermoplastic resins can be used which are modified with a functional group that can react with the reactive functional group of the reactive polyfunctional compound.

For example, when the reactive polyfunctional compound has an amino group, a modified thermoplastic resin having a modified portion that can react with an amino group, such as a maleic anhydride-modified polyolefin or a chlorinated polyolefin, can be preferably used. Examples of the maleic anhydride-modified polyolefin include maleic anhydride-modified polypropylene and maleic anhydride-modified polyethylene. Examples of the chlorinated polyolefin include chlorinated polypropylene and chlorinated polyethylene. When the reactive polyfunctional compound is the compound A having a structure represented by the formula (1) or the compound B and has an amino group, the modified thermoplastic resin to be used is more preferably a maleic anhydride-modified polyolefin that has high reactivity with an amino group. In this case, a modified portion of the maleic anhydride-modified polyolefin and an amino group of the compound A or the compound B are reacted by condensation to form chemical bonding.

### (Carbon Material Having Graphene Structure)

In the present invention, a carbon material having a graphene structure is used to make a reinforcing effect on the resin composite material and, if necessary, to impart conductivity to the resin composite material. As such a carbon material having a graphene structure, at least one selected from the group consisting of graphene, graphene oxide, carbon nanotubes, exfoliated graphite, and exfoliated graphite oxide can be used.

It is to be noted that the "exfoliated graphite" refers to one that is obtained by exfoliating normal graphite and is made up of about several to 200 stacked graphene layers.

The carbon material having a graphene structure is more preferably a laminate of graphene oxide sheets, that is, exfoliated graphite oxide. The "exfoliated graphite oxide" refers to one obtained by oxidizing exfoliated graphite obtained by exfoliating original graphite or one obtained by exfoliating graphite oxide. Exfoliated graphite oxide is a graphene oxide laminate and is thinner than original graphite or graphite oxide. The number of stacked graphene oxide layers of exfoliated graphite oxide should be smaller than that of original graphite and is usually about several to 200.

When exfoliated graphite oxide is used as the carbon material having a graphene structure, the carbon material having a graphene structure can be bonded to the compound A or the compound B by a silane coupling reaction. In order to cause the silane coupling reaction, the ratio of oxygen atoms contained in the exfoliated graphite oxide, that is, the C/O ratio of the exfoliated graphite oxide determined by elemental analysis is preferably in the range of 2 to 20. It is to be noted that in the present invention, the "C/O ratio determined by elemental analysis" refers to the ratio of the number of moles of carbon atoms to the number of moles of oxygen atoms determined by elemental analysis.

The exfoliated graphite oxide has a shape with a relatively large aspect ratio. Therefore, when the exfoliated graphite oxide is uniformly dispersed in the resin composite material, its reinforcing effect against an external force exerted in a direction intersecting a lamination plane of the exfoliated graphite oxide can be effectively enhanced. It is to be noted that in the present invention, the "aspect ratio" refers to the ratio of the maximum size in the direction of the graphene lamination plane to the thickness of exfoliated graphite oxide.

If the aspect ratio of the exfoliated graphite oxide is too low, there is a case where its reinforcing effect against an external force exerted in a direction intersecting the lamination plane is not sufficient. On the other hand, if the aspect ratio of the exfoliated graphite oxide is too high, there is a case where its reinforcing effect is saturated and is therefore not enhanced in proportion to the aspect ratio. For this reason, the lower and upper limits of aspect ratio of the exfoliated graphite oxide are preferably 50 and 5000, respectively.

The ratio of the carbon material having a graphene structure to be blended is not particularly limited, but is preferably in the range of 0.5 to 40 parts by weight with respect to 100 parts by weight of the thermoplastic resin. If the ratio of the carbon material having a graphene structure to be blended is less than 0.5 parts by weight, there is a case where the reinforcing effect of the exfoliated graphite oxide derivative is insufficient. On the other hand, if the ratio of the carbon material having a graphite structure to be blended exceeds 40 parts by weight, there is a case where the resin composite material can have high stiffness but is brittle and is likely to be broken.

### (Other Components)

Various additives may be used in the resin composite material according to the present invention without interfering with the object of the present invention. Examples of such additives include: a phenol-, phosphorus-, amine-, or sulfur-based antioxidant; a metal harm inhibitor; a halogenated flame retardant such as hexabromobiphenyl ether or decabromodiphenyl ether; a flame retardant such as ammonium polyphosphate or trimethyl phosphate; various fillers; an antistatic agent; a stabilizer; and a pigment.

When the reactive polyfunctional compound having radical reactivity is used, a radical generator such as a peroxide may be added. Such a radical generator can effectively cause the reaction of the reactive polyfunctional compound even when the temperature or share velocity of an extruder is relatively low.

### (Resin Composite Material Production Process)

A production method according to the present invention is a method for obtaining a resin composite material according to the present invention. The method for producing a resin composite material according to the present invention includes: a first step of chemically bonding a reactive polyfunctional compound and a thermoplastic resin together; and a second step of chemically bonding a reactive polyfunctional compound and a carbon material having a graphene structure together.

In the present invention, the first step and the second step may be performed in different steps or in the same step. When the first step and the second step are performed in different steps, chemical bonding can be effectively formed in each of the steps. This makes it possible to further enhance mechanical strength.

When the first step and the second step are performed separately from each other, the order of the steps is not particularly limited. More specifically, the second step may be performed after the first step. Alternatively, the first step may be performed after the second step.

When the first step and the second step are performed at the same time, the process of production can be simplified. A method for forming chemical bonding in the first and second steps is not particularly limited per se. That is, the following various methods for forming chemical bonding can be used.

The type of chemical bonding between the reactive polyfunctional compound and the thermoplastic resin is not particularly limited, and examples of the chemical bonding include covalent bonding, ionic bonding, and van der Waals bonding. The chemical bonding may be preferably bonding formed by a radical reaction between the reactive polyfunctional compound and the thermoplastic resin.

The type of chemical bonding between the reactive polyfunctional compound and the carbon material having a graphene structure is not particularly limited.

Chemical bonding between the reactive polyfunctional compound and the thermoplastic resin can be formed using a method such as heating, electron beam irradiation, or addition of a peroxide.

As described above, a method for forming chemical bonding between the reactive polyfunctional compound and the carbon material having a graphene structure is not limited, either, and an appropriate method can be used.

As described above, exfoliated graphite oxide is preferably used as the carbon material having a graphene structure in the present invention, which makes it possible to easily form chemical bonding between the reactive polyfunctional compound and the carbon material having a graphene structure.

In the present invention, the thermoplastic resin and the carbon material having a graphene structure may be directly chemically bonded together. In this case, the mechanical strength of the resin composite material can be further enhanced. Such chemical bonding can be formed by, for example, a graft reaction between the thermoplastic resin and the carbon material having a graphene structure.

A preferred embodiment of the resin composite material production method according to the present invention will be described. In this preferred embodiment, a thermoplastic resin, a carbon material having a graphene structure, and a reactive polyfunctional compound are kneaded in an extruder. During the process of kneading, the reactive polyfunctional compound is chemically bonded to at least one of the thermoplastic resin and the carbon material having a graphene structure. The above-described chemical bonding can be formed during the process of kneading, and therefore a resin composite material can be easily produced.

More specifically, the following first and second methods can be mentioned.

In the first method, the reactive polyfunctional compound is chemically bonded to one of the thermoplastic resin and the carbon material having a graphene structure during the process of kneading. Then, a composite material is extruded from the extruder, and the reactive polyfunctional compound is chemically bonded to the other of the thermoplastic resin and the carbon material having a graphene structure outside the extruder. In this way, the reactive polyfunctional compound is chemically bonded to both the thermoplastic resin and the carbon material having a graphene structure to obtain a resin composite material according to the present invention.

In the second method, the reactive polyfunctional compound is chemically bonded to both the thermoplastic resin and the carbon material having a graphene structure during the process of kneading. In this case, a resin composite material according to the present invention can be immediately extruded from the extruder. Therefore, the process of production can be further simplified.

As described above, in the resin composite material production method according to the present invention in which a reactive polyfunctional compound is chemically bonded to both a thermoplastic resin and a carbon material having a graphene structure, the step of chemically bonding the reactive polyfunctional compound to one of the thermoplastic resin and the carbon material having a graphene structure is performed during the process of kneading in an extruder, and the step of chemically bonding the reactive polyfunctional compound to the other of the thermoplastic resin and the carbon material having a graphene structure may be performed at the same time as the above step during the process of kneading or after kneading and extrusion.

As the extruder, any appropriate extruder can be used as long as the thermoplastic resin, the carbon material having a graphene structure, and the reactive polyfunctional compound can be kneaded. An example of such an extruder includes an intermeshing twin screw extruder equipped with a kneading screw and two or more cylinder barrels in which the screw is provided, etc. An example of such a twin screw extruder includes an intermeshing co-rotating twin screw extruder equipped with a screw having a self-wiping twin screw element and a kneading disc element and two or more cylinder barrels.

A specific example of such an intermeshing co-rotating twin screw extruder includes Type "BT40" manufactured by Research Laboratory of Plastics Technology Co., Ltd.

By connecting, for example, a T-die to the tip of the extruder, a sheet-shaped resin composite material can be obtained.

The extruder needs to be configured so that it can be heated to set the temperature in the extruder to an appropriate temperature to knead the thermoplastic resin, the carbon material having a graphene structure, and the reactive polyfunctional compound. The heating temperature should be appropriately selected depending on the type of material to be used and the type of chemical bonding to be formed.

For example, when polypropylene is used as the thermoplastic resin, the temperature inside the extruder should be set to 180°C or higher because the melting point of polypropylene is about 170°C. It is to be noted that the "melting point" refers to a melting peak temperature measured by DSC.

That is, the temperature in the extruder needs to be equal to or higher than the melting point of the thermoplastic resin to be used. The upper limit of the heating temperature should be set to a temperature at or below which the thermoplastic resin and the reactive polyfunctional compound are not deteriorated.

In the case of the above-described first method, that is, when chemical bonding is further formed outside the extruder, the resin composite material extruded from the extruder should be heated to an appropriate temperature or subjected to treatment, such as electron beam irradiation, outside the extruder to form chemical bonding.

In the first method, the step of chemically bonding the reactive polyfunctional compound and the thermoplastic resin together and the step of chemically bonding the reactive polyfunctional compound and the carbon material having a graphene structure together can be performed separately from each other. Therefore, chemical bonding can be formed by a method appropriately selected depending on the type of chemical bonding to be formed. This makes it possible to obtain a resin composite material having higher mechanical strength.

The resin composite material according to the present invention obtained by the above-described production method is molded by extrusion from the extruder, and therefore according to the present invention, resin composite material molded articles having various shapes can be obtained by extrusion molding. For example, by connecting a T-die to the extruder, a sheet-shaped resin composite material having high mechanical strength can be obtained.

Further, the resin composite material according to the present invention contains the carbon material having a graphene structure. This also makes it possible for the resin composite material to exhibit conductivity. Therefore, the resin composite material has potential for use as a material that exhibits conductivity.

Hereinbelow, the present invention will become apparent with reference to specific examples of the present invention. It is to be noted that the present invention is not limited to the following examples.

### (Exfoliated Graphite Oxide)

Exfoliated graphite oxide used in Examples and Comparative Examples of the present invention was produced by the following method.

Exfoliated graphite oxide whose C/O ratio determined by elemental analysis was 2 was produced by the Hummer's method reported in J. Chem. Soc. W. S. Hummers et. al. 1958, 80, 1339.

Part of the exfoliated graphite oxide whose C/O ratio was 2 was heated in air at 200°C for 2 hours to produce exfoliated graphite oxide whose C/O ratio determined by elemental analysis was 8.

### (Reference Example 1)

Exfoliated graphite oxide (whose C/O ratio determined by elemental analysis was 8) produced by the above method was ultrasonically dispersed in a water/ethanol (50/50) mixed solution to prepare a mixture having a exfoliated graphite oxide concentration of 1 mg/mL. Then, acetic acid was added to the mixture to adjust the pH of the mixture to 5. Then, vinyltriethoxysilane was added thereto so that the percentage by weight of the vinyltriethoxysilane in the mixture was 0.5 wt%. Then, the mixture was ultrasonically treated for 1 hour. Then, ethanol was evaporated at room temperature and then the mixture was heated at 120°C for 2 hours. Then, the resulting reaction mixture was ultrasonically treated in acetone, and the liquid was removed by filtration to obtain surface-modified exfoliated graphite oxide bonded with vinyltriethoxysilane.

Five parts by weight of the obtained surface-modified exfoliated graphite oxide and 100 parts by weight of polypropylene (manufactured by Prime Polymer Co., Ltd. under the trade name of "J-721GR", tensile elastic modulus: 1.2 GPa, linear expansion coefficient: 11 × 10-5/K) were melt-kneaded in a Labo Plastomill (manufactured by Toyo Seiki Kogyo Co., Ltd. under the trade name of "R-100") at 180°C and press-molded into sheet form to obtain a resin composition sheet having a thickness of 0.5 mm.

Then, the resin composition sheet was irradiated with electron beams to chemically bond the vinyltriethoxysilane to the polypropylene to obtain a resin composite material sheet (thickness: 0.5 mm).

### (Reference Example 2)

One hundred parts by weight of polypropylene (manufactured by Prime Polymer Co., Ltd. under the trade name of "J-721GR", tensile elastic modulus: 1.2 GPa, linear expansion coefficient: 11 × 10⁻⁵/K), 5 parts by weight of exfoliated graphite oxide (whose C/O ratio determined by elemental analysis was 8) produced by the above method, and 10 parts by weight of vinyltriethoxysilane were melt-kneaded in a Labo Plastomill (manufactured by Toyo Seiki Kogyo Co., Ltd. under the trade name of "R-100") at 180°C and press-molded into sheet form to obtain a resin composition sheet having a thickness of 0.5 mm.

Then, the resin composition sheet was irradiated with electron beams to chemically bond the polypropylene and the vinyltriethoxysilane together.

Then, the resin composition sheet was immersed in hot water at 80°C for 24 hours to chemically bond the vinyltriethoxysilane and the exfoliated graphite oxide together to obtain a resin composite material sheet (thickness: 0.5 mm).

### (Reference Example 3)

One hundred parts by weight of maleic anhydride-modified polypropylene (manufactured by Mitsui Chemicals Inc. under the trade name of "ADMER QE800", tensile elastic modulus: 1.5 GPa, linear expansion coefficient: 10 × 10⁻⁵/K), 5 parts by weight of exfoliated graphite oxide (whose C/O ratio determined by elemental analysis was 8) produced by the above method, and 10 parts by weight of 3-aminopropyltriethoxysilane were melt-kneaded in a Labo Plastomill (manufactured by Toyo Seiki Kogyo Co., Ltd. under the trade name of "R-100") at 180°C and press-molded into sheet form to obtain a resin composition sheet having a thickness of 0.5 mm.

Then, the resin composition sheet was immersed in hot water at 80°C for 24 hours to couple the 3-aminopropyltriethoxysilane. By doing so, a resin composite material sheet (thickness: 0.5 mm) was obtained in which the maleic anhydride-modified polypropylene and the exfoliated graphite oxide were bonded together via the 3-aminopropyltriethoxysilane.

### (Reference Example 4)

A resin composite material sheet was obtained in the same manner as in Reference Example 2 except that carbon nanotubes (manufactured by CNT under the trade name of "CTUBE-100") were used instead of exfoliated graphite oxide.

### (Reference Example 5)

An intermeshing co-rotating twin screw extruder (Type "BT40" manufactured by Research Laboratory of Plastics Technology Co., Ltd.) was prepared, which was equipped with a screw (diameter: 39 mm, L/D = 35) constituted from a self-wiping twin screw element and a kneading disc element and a cylinder barrel divided into 10 parts. A T-die having a discharge port with a width of 150 mm and a thickness of 1 mm was connected to the tip of the extruder.

The 10 parts of the cylinder barrel were defined as first to tenth barrels from the upstream to downstream of the extruder. The temperatures of the first to fifth barrels, sixth to eighth barrels, and ninth to tenth barrels and the coat-hanger die were set to 180°C, 230°C, and 210°C, respectively.

Maleic anhydride-modified polypropylene (manufactured by Mitsui Chemicals Inc. under the trade name of "ADMER QE800", tensile elastic modulus: 1.5 GPa, linear expansion coefficient: 10 × 10⁻⁵/K) was fed into a hopper and supplied to the extruder through a supply port at a supply rate of 10 kg/hr using a screw feeder. Exfoliated graphite oxide (whose C/O ratio determined by elemental analysis was 8) produced by the above method was fed through a side feeder provided in the third barrel at a rate of 500 g/hr. Further, 3-glycidoxypropyltriethoxysilane was supplied to the extruder through the fifth barrel at a supply rate of 500 g/hr using a micropump ("VC-102 MODEL 186-346" manufactured by Chuorika Co., Ltd.) and an injection nozzle. During this period, the extruder was operated at a screw rotation speed of 40 rpm and a resin composite material was discharged through the discharge port of the T-die to obtain a resin composite material sheet.

Then, the resin composite material sheet was immersed in hot water at 80°C for 24 hours to chemically bond the 3-glycidoxypropyltriethoxysilane and the exfoliated graphite oxide together to obtain a resin composite material sheet.

### (Example 6)

The same T-die as used in Reference Example 5 was connected to the tip of the same intermeshing co-rotating twin screw extruder as used in Reference Example 5.

The temperature set of the cylinder barrel were defined as first to tenth barrels from the upstream to downstream of the extruder, the temperatures of the first to fifth barrels, sixth to eighth barrels, and ninth to tenth barrels and the coat-hanger die were set to 180°C, 220°C, and 200°C, respectively.

Polypropylene (manufactured by Prime Polymer Co., Ltd. under the trade name of "J-721GR", tensile elastic modulus: 1.2 GPa, linear expansion coefficient: 11 × 10⁻⁵/K) was fed into a hopper and supplied to the extruder through a supply port at a supply rate of 10 kg/hr using a screw feeder. Exfoliated graphite oxide (whose C/O ratio determined by elemental analysis was 8) produced by the above method and p-quinonedioxime ("Vulnoc GM-P" manufactured by Ouchi Sinko Chemical Industrial Co., Ltd.) were fed through a side feeder provided in the third barrel at a rate of 500 g/hr and a rate of 150 g/hr, respectively, and the extruder was operated at a screw rotation speed of 40 rpm and a resin composite material was discharged through the discharge port of the T-die to obtain a resin composite material sheet.

### (Reference Example 7)

A resin composite material sheet was obtained in the same manner as in Example 6 except that maleic anhydride-modified polypropylene (manufactured by Mitsui Chemicals Inc. under the trade name of "ADMER QE800", tensile elastic modulus: 1.5 GPa, linear expansion coefficient: 10 × 10⁻⁵/K) was used instead of polypropylene in Example 6 and that phenylenediamine was used instead of p-quinonedioxime and its feed rate was changed to 200 g/hr.

### (Reference Example 8)

As in the case of Reference Example 5, a T-die was connected to the tip of the intermeshing co-rotating twin screw extruder used in Reference Example 5.

The temperature set of the cylinder barrel were defined as first to tenth barrels from the upstream to downstream of the extruder, and the temperatures of the first to fifth barrels, sixth to eighth barrels, and ninth to tenth barrels and the coat-hanger die were set to 180°C, 220°C, and 200°C, respectively.

Polypropylene (manufactured by Prime Polymer Co., Ltd. under the trade name of "J-721GR", tensile elastic modulus: 1.2 GPa, linear expansion coefficient: 11 × 10⁻⁵/K) was fed into a hopper and supplied to the extruder through a supply port at a supply rate of 10 kg/hr using a screw feeder. Exfoliated graphite oxide (whose C/O ratio determined by elemental analysis was 8) produced by the above method was fed through a side feeder provided in the third barrel at a rate of 500 g/hr. Then, a 4/1 mixture (weight ratio) of 1,9-nonanediol dimethacrylate ("LIGHT ESTER 1.9ND" manufactured by Kyoeisha Chemical Co., Ltd.) and dicumyl peroxide (manufactured by NOF Corporation) was supplied to the extruder through the fifth barrel at a supply rate of 100 g/hr using a micropump ("VC-102 MODEL 186-346" manufactured by Chuorika Co., Ltd.) and an injection nozzle. During this period, the extruder was operated at a screw rotation speed of 40 rpm and a resin composite material was discharged through the discharge port of the T-die to obtain a resin composite material sheet.

### (Reference Example 9)

One hundred parts by weight of polyethylene (manufactured by Prime Polymer Co., Ltd. under the trade name of "1300J", tensile elastic modulus: 1.3 GPa, linear expansion coefficient: 11 × 10⁻⁵/K), 5 parts by weight of exfoliated graphite oxide (whose C/O ratio determined by elemental analysis was 8) produced by the above method, and 10 parts by weight of vinyltriethoxysilane were melt-kneaded in a Labo Plastomill (manufactured by Toyo Seiki Kogyo Co., Ltd. under the trade name of "R-100") at 180°C and press-molded into sheet form to obtain a resin composition sheet having a thickness of 0.5 mm.

Then, the resin composition sheet was irradiated with electron beams to chemically bond the polypropylene and the vinyltriethoxysilane together.

Then, the resin composition sheet was immersed in hot water at 80°C for 24 hours to chemically bond the vinyltriethoxysilane and the exfoliated graphite oxide together to obtain a resin composite material sheet (thickness: 0.5 mm).

### (Reference Example 10)

One hundred parts by weight of polycarbonate (manufactured by Mitsubishi Engineering-Plastics Corporation under the trade name of "H-4000", tensile elastic modulus: 2.4 GPa, linear expansion coefficient: 6.5 × 10⁻⁵/K), 5 parts by weight of exfoliated graphite oxide (whose C/O ratio determined by elemental analysis was 8) produced by the above method, and 10 parts by weight of 3-aminopropyltriethoxysilane were melt-kneaded in a Labo Plastomill (manufactured by Toyo Seiki Kogyo Co., Ltd. under the trade name of "R-100") at 270°C and press-molded into sheet form to obtain a resin composition sheet having a thickness of 0.5 mm.

Then, the resin composition sheet was immersed in hot water at 80°C for 24 hours to couple the 3-aminopropyltriethoxysilane. By doing so, a resin composite material sheet (thickness: 0.5 mm) was obtained in which the polycarbonate and the exfoliated graphite oxide were bonded together via the 3-aminopropyltriethoxysilane.

### (Reference Example 11)

One hundred parts by weight of polyester (manufactured by Mitsubishi Engineering-Plastics Corporation under the trade name of "5010R3-2", tensile elastic modulus: 2.4 GPa, linear expansion coefficient: 10 × 10⁻⁵/K), 5 parts by weight of exfoliated graphite oxide (whose C/O ratio determined by elemental analysis was 8) produced by the above method, and 10 parts by weight of 3-aminopropyltriethoxysilane were melt-kneaded in a Labo Plastomill (manufactured by Toyo Seiki Kogyo Co., Ltd. under the trade name of "R-100") at 240°C and press-molded into sheet form to obtain a resin composition sheet having a thickness of 0.5 mm.

Then, the resin composition sheet was immersed in hot water at 80°C for 24 hours to couple the 3-aminopropyltriethoxysilane. By doing so, a resin composite material sheet (thickness: 0.5 mm) was obtained in which the polyester and the exfoliated graphite oxide were bonded together via the 3-aminopropyltriethoxysilane.

### (Reference Example 12)

One hundred parts by weight of polyamide (manufactured by Asahi Kasei Corporation under the trade name of "1300S", flexual modulus: 2.7 GPa, linear expansion coefficient: 8 × 10⁻⁵/K), 5 parts by weight of exfoliated graphite oxide (whose C/O ratio determined by elemental analysis was 8) produced by the above method, and 10 parts by weight of 3-isocyanatepropyltriethoxysilane were melt-kneaded in a Labo Plastomill (manufactured by Toyo Seiki Kogyo Co., Ltd. under the trade name of "R-100") at 270°C and press-molded into sheet form to obtain a resin composition sheet having a thickness of 0.5 mm.

Then, the resin composition sheet was immersed in hot water at 80°C for 24 hours to couple the 3-isocyanatepropyltriethoxysilane. By doing so, a resin composite material sheet (thickness: 0.5 mm) was obtained in which the polyamide and the exfoliated graphite oxide were bonded together via the 3-isocyanatepropyltriethoxysilane.

### (Reference Example 13)

One hundred parts by weight of polystyrene (manufactured by DIC under the trade name of "CR-3500", flexural modulus: 3.3 GPa), 5 parts by weight of exfoliated graphite oxide (whose C/O ratio determined by elemental analysis was 8) produced by the above method, and 10 parts by weight of vinyltriethoxysilane were melt-kneaded in a Labo Plastomill (manufactured by Toyo Seiki Kogyo Co., Ltd. under the trade name of "R-100") at 220°C and press-molded into sheet form to obtain a resin composition sheet having a thickness of 0.5 mm.

Then, the resin composition sheet was irradiated with electron beams to chemically bond the polystyrene and the vinyltriethoxysilane together.

Then, the resin composition sheet was immersed in hot water at 80°C for 24 hours to chemically bond the vinyltriethoxysilane and the exfoliated graphite oxide together to obtain a resin composite material sheet (thickness: 0.5 mm).

### (Reference Example 14)

One hundred parts by weight of polymethylmethacrylate (manufactured by Mitsubishi Rayon Co., Ltd. under the trade name of "VH000", tensile elastic modulus: 3.3 GPa, linear expansion coefficient: 6 × 10⁻⁵/K), 5 parts by weight of exfoliated graphite oxide (whose C/O ratio determined by elemental analysis was 8) produced by the above method, and 10 parts by weight of 3-aminopropyltriethoxysilane were melt-kneaded in a Labo Plastomill (manufactured by Toyo Seiki Kogyo Co., Ltd. under the trade name of "R-100") at 240°C and press-molded into sheet form to obtain a resin composition sheet having a thickness of 0.5 mm.

Then, the resin composition sheet was immersed in hot water at 80°C for 24 hours to couple the 3-aminopropyltriethoxysilane. By doing so, a resin composite material sheet (thickness: 0.5 mm) was obtained in which the polymethylmethacrylate and the exfoliated graphite oxide were bonded together via the 3-aminopropyltriethoxysilane.

### (Comparative Example 1)

A resin composite material was obtained in the same manner as in Example 1 except that addition of vinyltriethoxysilane was omitted.

### (Comparative Example 2)

A resin composite material sheet was obtained in the same manner as in Example 1 except that electron beam irradiation was omitted.

### (Comparative Example 3)

A resin composite material sheet was obtained in the same manner as in Example 2 except that immersion in hot water at 80°C for 24 hours was omitted.

### (Comparative Example 4)

A resin composite material sheet was obtained in the same manner as in Example 2 except that trimethylolpropane trimethacrylate was used instead of vinyltriethoxysilane.

### (Comparative Example 5)

A resin composite material sheet was obtained in the same manner as in Example 5 except that addition of 3-glycidoxypropyltriethoxysilane was omitted.

### (Comparative Example 6)

A resin composite material sheet was obtained in the same manner as in Example 6 except that addition of p-quinonedioxime was omitted.

### (Comparative Example 7)

A resin composite material sheet was obtained in the same manner as in Example 7 except that addition of phenylenediamine was omitted.

### (Comparative Example 8)

A resin composite material sheet was obtained in the same manner as in Example 8 except that addition of 1,9-nonanediol dimethacrylate was omitted.

### (Comparative Example 9)

The resin composite material sheet extruded from the extruder in Example 5 was used as Comparative Example 9.

### (Comparative Example 10)

A resin composite material was obtained in the same manner as in Example 9 except that addition of vinyltriethoxysilane was omitted.

### (Comparative Example 11)

A resin composite material was obtained in the same manner as in Example 10 except that addition of 3-aminopropyltriethoxysilane was omitted.

### (Comparative Example 12)

A resin composite material was obtained in the same manner as in Example 11 except that addition of 3-aminopropyltriethoxysilane was omitted.

### (Comparative Example 13)

A resin composite material was obtained in the same manner as in Example 12 except that addition of 3-isocyanatepropyltriethoxysilane was omitted.

### (Comparative Example 14)

A resin composite material was obtained in the same manner as in Example 13 except that addition of vinyltriethoxysilane was omitted.

### (Comparative Example 15)

A resin composite material was obtained in the same manner as in Example 14 except that addition of 3-aminopropyltriethoxysilane was omitted.

### (Tensile Elastic Modulus)

Flat rectangular test pieces having a length of 70 mm and a width of 6.0 mm were cut from the resin composite material sheets obtained in Examples 1 to 14 and Comparative Examples 1 to 15. The tensile elastic modulus of each of the test pieces at 23°C and 80°C were measured in accordance with JIS K7161 and results are shown in Table 1.

**[Table 1]**

| | | | | | | Tensile Elastic Modulus GPa | |
|---|---|---|---|---|---|---|---|
| | Resin | Gr | Reactive Polyfunctional Compound | Remarks | Reference | 23°C | 80°C |
| Example 1 | PP | GO | Vinyltriethoxysilane | | | 4.95 | 1.82 |
| Example 2 | PP | GO | Vinyltriethoxysilane | | | 4.76 | 168 |
| Example 3 | Maleic acid-modified PP | GO | 3-aminopropyltriethoxysilane | | | 4.23 | 1.73 |
| Example 4 | PP | CNT | Vinyltriethoxysilane | | Example 2 | 3.92 | 1.13 |
| Example 5 | Maleic acid-modified PP | GO | 3-glycidoxypropyltriethoxysilane | Extrusion | | 4.88 | 1.91 |
| Example 6 | PP | GO | p-quinonedioxime | Extrusion | | 4.56 | 1.71 |
| Example 7 | Maleic acid-modified PP | GO | Phenylenediamine | Extrusion | Example 6 | 4.67 | 1.76 |
| Example 8 | PP | GO | 1,9-nonanediol dimethacrylate | Extrusion | | 3.74 | 1.69 |
| Example 9 | PE | GO | Vinyltriethoxysilane | | | 4.73 | 1.66 |
| Example 10 | Polycarbonate | GO | 3-aminopropyltriethoxysilane | | | 5.83 | 1.98 |
| Example 11 | Polyester | GO | 3-aminopropyltriethoxysilane | | | 5.78 | 1.79 |
| Example 12 | Polyamide | GO | 3-isocyanatepropyltriethoxysilane | | | 5.94 | 2.26 |
| Example 13 | Polystyrene | GO | Vinyltriethoxysilane | | | 6.51 | 1.89 |
| Example 14 | Polymethylmethacrylate | GO | 3-aminopropyltriethoxysilane | | | 6.82 | 2.18 |
| Compt. Ex. 1 | PP | GO | | | Example 1 | 2.01 | 0.68 |
| Compt. Ex. 2 | PP | GO | Vinyltriethoxysilane | Unbonded | Example 1 | 2.14 | 0.68 |
| Compt. Ex. 3 | PP | GO | Vinyltriethoxysilane | Unbonded | Example 2 | 2.23 | 0.78 |
| Compt. Ex. 4 | PP | GO | Trimethylolpropanetrimethacrylate | | Example 2 | 1.78 | 0.46 |
| Compt. Ex. 5 | Maleic acid-modified PP | GO | | Extrusion | Example 5 | 2.22 | 0.81 |
| Compt. Ex. 6 | PP | GO | | Extrusion | Example 6 | 2.41 | 0.83 |
| Compt. Ex. 7 | Maleic acid-modified PP | GO | | Extrusion | Example 7 | 2.22 | 0.81 |
| Compt. Ex. 8 | PP | GO | | Extrusion | Example 8 | 2.01 | 0.73 |
| Compt. Ex. 9 | Maleic acid-modified PP | GO | 3-glycidoxypropyltriethoxysilane | Unbonded | Example 5 | 2.20 | 0.85 |
| Compt. Ex. 10 | PE | GO | | | Example 9 | 1.93 | 0.61 |
| Compt. Ex. 11 | Polycarbonate | GO | | | Example 10 | 2.73 | 0.82 |
| Compt. Ex. 12 | Polyester | GO | | | Example 11 | 2.78 | 0.88 |
| Compt. Ex. 13 | Polyamide | GO | | | Example 12 | 3.01 | 0.93 |
| Compt. Ex. 14 | Polystyrene | GO | | | Example 13 | 3.50 | 1.08 |
| Compt. Ex. 15 | Polymethylmethacrylate | GO | | | Example 14 | 3.29 | 0.99 |

### Examples 1-5 and 7-14 are Reference Examples.

As shown in Table 1, it is found that the resin composite material sheets produced in Reference Examples 1 to 4 according to the present invention have a much higher tensile elastic modulus than those produced in Comparative Examples 1 to 4. Particularly, it is found that their tensile elastic modulus at 80°C is much higher. The reason for this is considered to be that in Reference Examples 1 to 4, the polypropylene-based resin and the carbon material were bonded together via the silane compound. It is considered that this enhanced the mechanical strength of the resin composite material sheets of Reference Examples 1 to 4.

Further, the resin composite material sheets of Reference Examples 1 to 3 using exfoliated graphite as the carbon material have a higher tensile elastic modulus than that of Reference Example 4 using carbon nanotubes as the carbon material. The reason for this is considered to be that the mechanical strength of the resin composite material sheets of Reference Examples 1 to 3 was effectively enhanced by the exfoliated graphite oxide having a C/O ratio of 8.

In addition to that, the tensile elastic modulus of the resin composite material sheet of Reference Example 2 is as high as that of the resin composite material sheet of Reference Example 1. It can be seen from this that even when vinyltriethoxysilane, polypropylene, and exfoliated graphite oxide are first melt-kneaded, chemical bonding between vinyltriethoxysilane and polypropylene and chemical bonding between vinyltriethoxysilane and exfoliated graphite oxide can be selectively and effectively formed by appropriately adjusting reaction conditions.

It is found that the resin composite material sheets of Reference Examples 5, 7 and 8 and Example 6 have a much higher tensile elastic modulus at both 23°C and 80°C than those of Comparative Examples 5 to 8. The reason for this is considered to be that addition of the reactive polyfunctional compound was omitted in Comparative Examples 5 to 8, whereas in Reference Examples 5, 7 and 8, and Example 6, 3-glycidoxypropyltriethoxysilane, p-quinonedioxime, phenylenediamine, and 1,9-nonanediol dimethacrylate were added as the reactive polyfunctional compound, respectively. That is, it is considered that in Reference Examples 1 to 4, the reactive polyfunctional compound was chemically bonded to both maleic anhydride-modified polypropylene and polypropylene as the thermoplastic resin and exfoliated graphite oxide, which enhanced the tensile elastic modulus. More specifically, it is considered that in Reference Example 5, maleic anhydride-modified polypropylene and 3-glycidoxypropyltriethoxysilane were chemically bonded together during the process of kneading in the extruder and 3-glycidoxypropyltriethoxysilane and exfoliated graphite oxide were chemically bonded together by immersing the resin composite material sheet in hot water at 80°C for 24 hours, which enhanced the tensile elastic modulus.

Further, it is considered that in Example 6 and Reference Example 7, p-quinonedioxime or phenylenediamine was chemically bonded to polypropylene or maleic anhydride-modified polypropylene and exfoliated graphite oxide in the extruder, which significantly enhanced the tensile elastic modulus.

It is considered that in Reference Example 8, 1,9-nonanediol dimethacrylate was chemically bonded to polypropylene and exfoliated graphite oxide during the process of kneading in the extruder, which significantly enhanced the tensile elastic modulus.

The resin composite material sheet of Comparative Example 9 has a lower tensile elastic modulus than that of Reference Example 5. The reason for this is considered to be that the resin composite material sheet of Comparative Example 9 was obtained from the extruder after kneading in Reference Example 1, and was therefore not subjected to treatment for chemically bonding 3-glycidoxypropyltriethoxysilane to exfoliated graphite oxide. However, the tensile elastic modulus of Comparative Example 9 is higher than that of Comparative Example 5. The reason for this is considered to be that maleic anhydride-modified polypropylene and 3-glycidoxypropyltriethoxysilane were chemically bonded together during the process of kneading.

Further, it is found that the resin composite material sheets produced in Reference Examples 9 to 14 have a much higher tensile elastic modulus than those produced in Comparative Examples 10 to 15. Particularly, it is found that their tensile elastic modulus at 80°C is much higher. The reason for this is considered to be that in Reference Examples 9 to 14, each of the thermoplastic resins and the carbon material were bonded together via the silane compound.

## Claims

1. A resin composite material obtained by chemically bonding a reactive polyfunctional compound to both a thermoplastic resin and a carbon material having a graphene structure, wherein the reactive polyfunctional compound is one reactive polyfunctional compound selected from the group consisting of a dioxime compound, a bismaleimide compound, and a quinone compound.

2. The resin composite material according to claim 1, wherein the carbon material having a graphene structure is at least one of the carbon materials selected from the group consisting of graphene, graphene oxide, carbon nanotubes, exfoliated graphite, and exfoliated graphite oxide.

3. The resin composite material according to claim 2, wherein the carbon material having a graphene structure is exfoliated graphite oxide, and wherein the exfoliated graphite oxide has a C/O ratio, as determined by elemental analysis, in a range of 2 to 20.

4. The resin composite material according to any one of claims 1 to 3, wherein the thermoplastic resin is a claims 1 to 3, wherein the thermoplastic resin is a polyolefin.

5. A method for producing the resin composite material according to any one of claims 1 to 4, comprising:
a first step of chemically bonding the reactive polyfunctional compound and the thermoplastic resin together; and
a second step of chemically bonding the reactive polyfunctional compound and the carbon material having a graphene structure together.

6. The resin composite material production method according to claim 5, wherein at least one of the first and second steps is performed during a process of kneading using an extruder.

7. The resin composite material production method according to claim 6, wherein the first and second steps are performed during a process of supplying and kneading the thermoplastic resin, the reactive polyfunctional compound, and the carbon material having a graphene structure to and in an extruder.

8. The resin composite material production method according to claim 6, wherein the second step is performed during the process of kneading in an extruder and the first step is performed after extrusion from the extruder.

9. A method for producing the resin composite material according to any one of claims 1 to 4, comprising the steps of:
supplying and kneading the thermoplastic resin, the reactive polyfunctional compound, and the carbon material having a graphene structure to and in an extruder to chemically bond the reactive polyfunctional compound to one of the thermoplastic resin and the carbon material having a graphene structure; and
chemically bonding the reactive polyfunctional compound to the other of the thermoplastic resin and the carbon material having a graphene structure.

10. The resin composite material production method according to claim 9, wherein the step of chemically bonding the reactive polyfunctional compound to the other of the thermoplastic resin and the carbon material having a graphene structure is performed during the process of kneading in an extruder to chemically bond the reactive polyfunctional compound to both the thermoplastic resin and the carbon material having a graphene structure during the process of kneading in an extruder.

11. The resin composite material production method according to claim 9, wherein the step of chemically bonding the reactive polyfunctional compound to the other of the thermoplastic resin and the carbon material having a graphene structure is performed after the reactive polyfunctional compound is chemically bonded to one of the thermoplastic resin and the carbon material having a graphene structure in the extruder and extruded from the extruder.

## Patentansprüche

1. Harzverbundmaterial, erhalten durch chemisches Binden einer reaktiven polyfunktionellen Verbindung an beides, ein thermoplastisches Harz und ein Kohlenstoffmaterial mit einer Graphenstruktur, wobei die reaktive polyfunktionelle Verbindung eine reaktive polyfunktionelle Verbindung ist, gewählt aus der Gruppe, bestehend aus einer Dioximverbindung, einer Bismaleimidverbindung und einer Chinonverbindung.

2. Harzverbundmaterial nach Anspruch 1, wobei das Kohlenstoffmaterial mit einer Graphenstruktur mindestens eines der Kohlenstoffmaterialien ist, gewählt aus der Gruppe, bestehend aus Graphen, Graphenoxid, Kohlenstoff-Nanoröhrchen, Blähgraphit und Blähgraphitoxid.

3. Harzverbundmaterial nach Anspruch 2, wobei das Kohlenstoffmaterial mit einer Graphenstruktur Blähgraphitoxid ist, und wobei das Blähgraphitoxid ein C/O-Verhältnis, bestimmt durch Elementaranalyse, in einem Bereich von 2 bis 20 aufweist.

4. Harzverbundmaterial nach irgendeinem der Ansprüche 1 bis 3, wobei das thermoplastische Harz ein Polyolefin ist.

5. Verfahren zur Herstellung des Harzverbundmaterials nach irgendeinem der Ansprüche 1 bis 4, umfassend:
einen ersten Schritt des chemisch miteinander Verbindens der reaktiven polyfunktionellen Verbindung und des thermoplastischen Harzes; und
einen zweiten Schritt des chemisch miteinander Verbindens der reaktiven polyfunktionellen Verbindung und des Kohlenstoffmaterials mit einer Graphenstruktur.

6. Harzverbundmaterial-Herstellungsverfahren nach Anspruch 5, wobei mindestens einer des ersten und des zweiten Schritts während eines Verfahrens des Knetens unter Verwendung eines Extruders durchgeführt wird.

7. Harzverbundmaterial-Herstellungsverfahren nach Anspruch 6, wobei der erste und der zweite Schritt während eines Verfahrens des Zuführens und Knetens des thermoplastischen Harzes, der reaktiven polyfunktionellen Verbindung und des Kohlenstoffmaterials mit einer Graphenstruktur zu und in einem Extruder durchgeführt werden.

8. Harzverbundmaterial-Herstellungsverfahren nach Anspruch 6, wobei der zweite Schritt während des Verfahrens des Knetens in einem Extruder und der erste Schritt nach Extrusion aus dem Extruder durchgeführt werden.

9. Verfahren zur Herstellung des Harzverbundmaterials nach irgendeinem der Ansprüche 1 bis 4, umfassend die Schritte:
Zuführen und Kneten des thermoplastischen Harzes, der reaktiven polyfunktionellen Verbindung und des Kohlenstoffmaterials mit einer Graphenstruktur zu und in einem Extruder, um die reaktive polyfunktionelle Verbindung an eines aus dem thermoplastischen Harz und dem Kohlenstoffmaterial mit einer Graphenstruktur chemisch zu binden; und
chemisches Binden der reaktiven polyfunktionellen Verbindung mit dem anderen aus dem thermoplastischen Harz und dem Kohlenstoffmaterial mit einer Graphenstruktur.

10. Harzverbundmaterial-Herstellungsverfahren nach Anspruch 9, wobei der Schritt des chemischen Bindens der reaktiven polyfunktionellen Verbindung mit dem anderen aus dem thermoplastischen Harz und dem Kohlenstoffmaterial mit einer Graphenstruktur durchgeführt wird während des Verfahrens des Knetens in einem Extruder, um die reaktive polyfunktionelle Verbindung chemisch an beide zu binden, dem thermoplastischen Harz und dem Kohlenstoffmaterial mit einer Graphenstruktur, während des Verfahrens des Knetens in einem Extruder.

11. Harzverbundmaterial-Herstellungsverfahren nach Anspruch 9, wobei der Schritt des chemischen Bindens der reaktiven polyfunktionellen Verbindung mit dem anderen aus dem thermoplastischen Harz und dem Kohlenstoffmaterial mit einer Graphenstruktur durchgeführt wird, nachdem die reaktive polyfunktionelle Verbindung chemisch an eines aus dem thermoplastischen Harz und dem Kohlenstoffmaterial mit einer Graphenstruktur in dem Extruder gebunden wird und aus dem Extruder extrudiert wird.

## Revendications

1. Un matériau composite à base de résine obtenu par liaison chimique d'un composé polyfonctionnel réactif à la fois à une résine thermoplastique et à un matériau de carbone ayant une structure de graphène, dans lequel le composé polyfonctionnel réactif est un composé polyfonctionnel réactif choisi dans le groupe consistant en un composé de dioxime, un composé de bismaléimide et d'un composé quinonique

2. Le matériau composite à base de résine selon la revendication 1, dans lequel le matériau de carbone ayant une structure de graphène est au moins l'un des matériaux de carbone choisi dans le groupe constitué par le graphène, l'oxyde de graphène, des nanotubes de carbone, du graphite exfolié et de l'oxyde de graphite exfolié.

3. Le matériau composite à base de résine selon la revendication 2, dans lequel le matériau de carbone ayant une structure de graphène est de l'oxyde de graphite exfolié et dans lequel l'oxyde de graphite exfolié présente un rapport C/O, tel que déterminé par analyse élémentaire, dans une plage de 2 à 20.

4. Le matériau composite à base de résine selon l'une quelconque des revendications 1 à 3, dans lequel la résine thermoplastique est une polyoléfine.

5. Procédé de fabrication du matériau composite à base de résine selon l'une quelconque des revendications 1 à 4, comprenant:
une première étape consistant à lier chimiquement le composé polyfonctionnel réactif et la résine thermoplastique ensemble; et
une seconde étape consistant à lier chimiquement le composé polyfonctionnel réactif et le matériau de carbone ayant une structure de graphène ensemble.

6. Le procédé de fabrication de matériau composite à base de résine selon la revendication 5, dans lequel au moins une des première et deuxième étapes est effectuée lors d'un procédé de pétrissage à l'aide d'une extrudeuse.

7. Le procédé de fabrication de matériau composite à base de résine selon la revendication 6, dans lequel les première et seconde étapes sont exécutées au cours d'un processus d'alimentation et de pétrissage de la résine thermoplastique, du composé polyfonctionnel réactif, et du matériau de carbone ayant une structure de graphène vers et dans une extrudeuse.

8. Le procédé de fabrication de matériau composite à base de résine selon la revendication 6, dans lequel la deuxième étape est effectuée au cours du processus de pétrissage dans une extrudeuse et la première étape est réalisée après l'extrusion de l'extrudeuse.

9. Procédé de fabrication du matériau composite à base de résine selon l'une quelconque des revendications 1 à 4, comprenant les étapes consistant à:
la fourniture et le pétrissage de la résine thermoplastique, du composé polyfonctionnel réactif, et du matériau de carbone ayant une structure de graphène vers et dans une extrudeuse afin de lier chimiquement le composé polyfonctionnel réactif à l'un de la résine thermoplastique et du matériau de carbone ayant une structure de graphène; et
la liaison chimique du composé polyfonctionnel réactif à l'autre de la résine thermoplastique et du matériau de carbone ayant une structure de graphène.

10. Le procédé de fabrication de matériau composite à base de résine selon la revendication 9, dans lequel l'étape consistant en la liaison chimique du composé polyfonctionnel réactif à l'autre de la résine thermoplastique et du matériau de carbone ayant une structure de graphène est effectuée pendant le processus de pétrissage dans une extrudeuse afin de lier chimiquement le composé polyfonctionnel réactif à la fois à la résine thermoplastique et au matériau de carbone ayant une structure de graphène au cours du processus de pétrissage dans une extrudeuse.

11. Le procédé de fabrication de matériau composite à base de résine selon la revendication 9, dans lequel l'étape consistant en la liaison chimique du composé polyfonctionnel réactif à l'autre de la résine thermoplastique et du matériau de carbone ayant une structure de graphène est effectuée après que le composé polyfonctionnel réactif est chimiquement lié à l'un de la résine thermoplastique et du matériau de carbone ayant une structure de graphène dans l'extrudeuse et extrudée de l'extrudeuse.
